# EUROPÄISCHE PATENTSCHRIFT

(11) **EP 4 198 276 B1**
(45) Veröffentlichungstag und Bekanntmachung des Hinweises auf die Patenterteilung: **19.06.2024**
(21) Anmeldenummer: 22207662.2
(22) Anmeldetag: 16.11.2022
(51) Int. Cl.: F01N 13/18, F16L 23/04

(54) **ANSCHLUSSELEMENT FÜR EINE ABGASANLAGE EINER BRENNKRAFTMASCHINE**
CONNECTING ELEMENT FOR AN EXHAUST SYSTEM OF AN INTERNAL COMBUSTION ENGINE
ELÉMENT DE RACCORDEMENT POUR UN SYSTÈME D'ÉCHAPPEMENT D'UN MOTEUR À COMBUSTION INTERNE

(30) Priorität: 14.12.2021 DE 102021132929
(43) Veröffentlichungstag der Anmeldung: 21.06.2023
(73) Patentinhaber: Purem GmbH, 66539 Neunkirchen (DE)
(72) Erfinder: Korb, Hagen, Aichwald (DE); Gotthard, Christoph, Esslingen (DE); Jambrosic, Kresimir, Reichenbach (DE)
(74) Vertreter: Ruttensperger Lachnit Trossin Gomoll

(56) Entgegenhaltungen:
- WO-A1-2019/201531
- CN-A- 112 648 046
- DE-A1- 2 910 684

## Beschreibung

Die vorliegende Erfindung betrifft ein Anschlusselement für eine Abgasanlage einer Brennkraftmaschine, umfassend einen in Richtung einer Anschlusselementenlängsachse sich erstreckenden, beispielsweise im Wesentlichen rohrartigen Anschlusselementenkörper, wobei eine Innenumfangsfläche des Anschlusselementenkörpers einen Abgasdurchlass des Anschlusselements umgrenzt, sowie einen von dem Anschlusselementenkörper nach radial außen sich erstreckenden, die Anschlusselementenlängsachse umgebenden Verbindungsflanschbereich, wobei der Verbindungsflanschbereich eine in Richtung zu einem ersten axialen Ende des Anschlusselementenkörpers orientierte Anlagefläche aufweist, und wobei ein über die Anlagefläche axial hervorstehender und das erste axiale Ende des Anschlusselementenkörpers bereitstellender Abschnitt des Anschlusselementenkörpers einen Zentrierabschnitt mit einer Zentrier-Außenumfangsfläche bereitstellt.

Derartige Anschlusselemente können dazu genutzt werden, in einer Abgasanlage einer Brennkraftmaschine in einem Fahrzeug aufeinander folgende Komponenten bzw. Systembereiche miteinander fest und gasdicht zu verbinden. Insbesondere können derartige Anschlusselemente dazu genutzt werden, den auf einen Turbolader folgenden Teil einer Abgasanlage an den Turbolader anzubinden. Hierzu kann der Turbolader ein zu dem Anschlusselement komplementäres Gegen-Anschlusselement umfassen, an welchem das Anschlusselement mit seiner Anlagefläche anliegend derart positioniert wird, dass der Zentrierabschnitt in einen Abgasdurchlass des Gegen-Anschlusselements eingreift und somit eine definierte Positionierung des Anschlusselements bezüglich des Gegen-Anschlusselements quer zur Anschlusselementenlängsachse vorgibt. Durch ein beispielsweise schellenartiges Verbindungsorgan können das Anschlusselement und das Gegen-Anschlusselement fest aneinander gekoppelt werden.

Ein Anschlusselement gemäß dem Oberbegriff des Anspruchs 1 ist aus der WO 2019/201531 A1 bekannt. Bei diesem Anschlusselement ist die im Übergang von einer Anlagefläche zu einer Zentrier-Außenumfangsfläche vorgesehene Einsenkung so positioniert und dimensioniert, dass damit ein zum Herstellen eines dichten Abschlusses geeigneter Verbund mit einem Gegen-Anschlusselement hergestellt werden kann.

Es ist die Aufgabe der vorliegenden Erfindung, ein Anschlusselement für eine Abgasanlage einer Brennkraftmaschine bereitzustellen, welches eine erhöhte Resistenz gegen mechanische und thermische Belastungen aufweist.

Erfindungsgemäß wird diese Aufgabe gelöst durch ein Anschlusselement für eine Abgasanlage einer Brennkraftmaschine gemäß Anspruch 1, umfassend:
- einen in Richtung einer Anschlusselementenlängsachse sich erstreckenden, beispielsweise im Wesentlichen rohrartigen Anschlusselementenkörper, wobei eine Innenumfangsfläche des Anschlusselementenkörpers einen Abgasdurchlass des Anschlusselements umgrenzt,
- einen von dem Anschlusselementenkörper nach radial außen sich erstreckenden, die Anschlusselementenlängsachse umgebenden Verbindungsflanschbereich, wobei der Verbindungsflanschbereich eine in Richtung zu einem ersten axialen Ende des Anschlusselementenkörpers orientierte Anlagefläche aufweist,
wobei ein über die Anlagefläche axial hervorstehender und das erste axiale Ende des Anschlusselementenkörpers bereitstellender Abschnitt des Anschlusselementenkörpers einen Zentrierabschnitt mit einer Zentrier-Außenumfangsfläche bereitstellt, wobei in einem Übergangsbereich zwischen der Anlagefläche und der Zentrier-Außenumfangsfläche eine die Anschlusselementenlängsachse umgebende Einsenkung mit einer bezüglich der Anlagefläche axial in Richtung vom ersten axialen Ende weg versetzten oder/und bezüglich der Zentrier-Außenumfangsfläche nach radial innen versetzten Einsenkungsoberfläche vorgesehen ist.

Durch das Bereitstellen der Einsenkung im Übergangsbereich zwischen der Anlagefläche und der Zentrier-Außenumfangsfläche wird ein scharfkantiger Übergang zwischen diesen beiden Flächen mit einem Winkel im Bereich von etwa 90° vermieden. In diesem Übergangsbereich wird daher das Auftreten von Spannungsspitzen weitestgehend verhindert, so dass die Gefahr, dass in diesem Bereich auftretende thermische und mechanische Belastungen des Anschlusselements zu einer Rissbildung im Material des im Allgemeinen mit Metallmaterial aufgebauten Anschlusselements führen können, deutlich gemindert ist.

Ein Krümmungsradius der Einsenkung im Übergang von der Anlagefläche zur Zentrier-Außenumfangsfläche liegt im Bereich von 1,1 mm bis 1,4 mm, vorzugsweise bei etwa 1,25 mm. Ein Krümmungsradius in diesem Wertebereich gewährleistet einerseits, dass Spannungskonzentrationen vermieden werden, stellt jedoch andererseits eine möglichst kleine Ausdehnung der Einsenkung in axialer bzw. radialer Richtung sicher.

Für einen einfach zu realisierenden und zuverlässig wirkenden Aufbau wird vorgeschlagen, dass die Anlagefläche zur Anschlusselementenlängsachse im Wesentlichen orthogonal orientiert ist oder/und die Anschlusselementenlängsachse vollständig umgibt.

Die Zentrier-Außenumfangsfläche kann bezüglich der Anschlusselementenlängsachse im Wesentlichen zylindrisch, beispielsweise mit kreisförmigen Querschnitt, ausgebildet sein. Die Zentrier-Außenumfangsfläche umgibt für eine zuverlässige Zentrierwirkung die Anschlusselementenlängsachse vorzugsweise vollständig.

Um im gesamten Umfangsbereich die Schutzwirkung der Einsenkung erhalten zu können, wird vorgeschlagen, dass die Einsenkung die Anschlusselementenlängsachse vollständig umgibt.

Das Auftreten von Spannungskonzentrationen kann weiter dadurch gemindert werden, dass die Einsenkung im Übergang von der Anlagefläche zur Zentrier-Außenumfangsfläche einen im Wesentlichen konstanten Krümmungsradius aufweist.

Um die über den Zentrierabschnitt in das Anschlusselement eingeleiteten mechanischen Belastungen möglichst klein zu halten, gleichwohl jedoch eine ausreichende Zentrierfunktion erreichen zu können, wird vorgeschlagen, dass eine axiale Länge des Zentrierabschnitts im Bereich von 3 mm bis 6 mm, vorzugsweise bei etwa 3,5 mm, liegt.

Um das Anschlusselement an weitere Komponenten, beispielsweise eine Abgasbehandlungseinheit mit wenigstens einem Katalysator oder/und wenigstens einem Partikelfilter in einem Abgasbehandlungseinheitgehäuse, anschließen zu können, kann der Anschlusselementenkörper an einer bezüglich des Zentrierabschnitts axial entgegengesetzten Seite des Verbindungsflanschbereichs einen ein zweites axiales Ende des Anschlusselementenkörpers bereitstellenden Verbindungsabschnitt zur Anbindung an eine Abgasführungskomponente einer Abgasanlage bereitstellen.

Die Erfindung betrifft ferner eine Abgasanlage für eine Brennkraftmaschine, umfassend ein erfindungsgemäß aufgebautes Anschlusselement sowie ein Gegen-Anschlusselement mit einem eine Gegen-Anlagefläche bereitstellenden Gegen-Verbindungsflanschbereich und einem von einer Innenumfangsfläche des Gegen-Anschlusselements umgrenzten Abgasdurchlass des Gegen-Anschlusselements, wobei bei bezüglich der Gegen-Anlagefläche abgestützter Anlagefläche der Zentrierabschnitt in den Abgasdurchlass des Gegen-Anschlusselement eingreifend positioniert ist.

Für eine möglichst gute Passung des Zentrierabschnitts kann die Innenumfangsfläche des Gegen-Anschlusselements wenigstens in dem den Zentrierabschnitt aufnehmenden Längenbereich im Wesentlichen zylindrisch, beispielsweise mit kreisrundem Querschnitt, ausgebildet sein.

Um dabei einerseits eine ausreichende Zentrierfunktion erreichen zu können, andererseits bei thermischer Belastung eine übermäßig starke Anpressung zwischen dem Anschlusselement und dem Gegen-Anschlusselement zu vermeiden, wird vorgeschlagen, dass eine Differenz zwischen einer Innenabmessung, vorzugsweise Innendurchmesser, der Innenumfangsfläche des Gegen-Anschlusselements und einer Außenabmessung, vorzugsweise Außendurchmesser, der Zentrier-Außenumfangsfläche im Bereich von 0,1 mm bis 0,5 mm liegt. Es besteht somit ein ausreichend großer Zwischenraum zwischen der Zentrier-Außenumfangsfläche und der Innenumfangsfläche des Gegen-Anschlusselements, so dass bei thermischer Belastung auftretende Ausdehnungen dieser Komponenten nicht zu einer übermäßig starken Pressung zwischen diesen führen können.

Die vorliegende Erfindung wird nachfolgend mit Bezug auf die beiliegenden Figuren detailliert beschrieben. Es zeigt:
- Fig. 1: eine Längsschnittansicht eines Anschlusselements;
- Fig. 2: das Detail II des Anschlusselements der Fig. 1 vergrößert und in Verbindung mit weiteren Komponenten einer Abgasanlage.

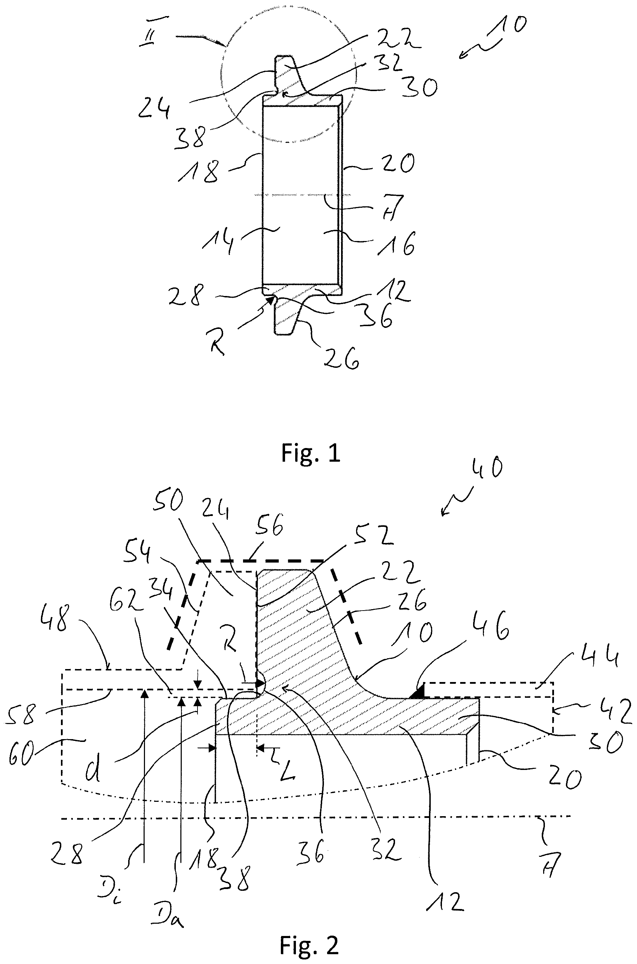

In Fig. 1 ist ein Anschlusselement für eine Abgasanlage einer Brennkraftmaschine allgemein mit 10 bezeichnet. Das als einstückiges Metallbauteil bereitgestellte Anschlusselement umfasst einen rohrartigen Anschlusselementenkörper 12, welcher mit einer im Wesentlichen zylindrischen, beispielsweise mit kreisrundem Querschnitt ausgebildeten Innenumfangsfläche 14 einen von Abgas durchströmbaren Abgasdurchlass 16 des Anschlusselements 10 umgibt. Zwischen einem ersten axialen Ende 18 und einem zweiten axialen Ende 20 des Anschlusselementenkörpers 12 erstreckt sich von diesem nach radial außen ein um eine Anschlusselementenlängsachse A vorzugsweise vollständig umlaufender Verbindungsflanschbereich 22. An seiner dem ersten axialen Ende 18 zugewandten axialen Seite weist der Verbindungsflanschbereich 22 eine zur Anschlusselementenlängsachse A im Wesentlichen orthogonal orientierte, um diese vollständig umlaufende Anlagefläche 24 auf. An seiner dem zweiten axialen Ende 20 zugewandten Seite weist der Verbindungsflanschbereich 22 eine bezüglich der Anlagefläche 24 angewinkelte, um die Anschlusselementenlängsachse A vollständig umlaufende Verbindungsorganabstützfläche 26 auf, so dass der Verbindungsflanschbereich 22 eine vom Anschlusselementenkörper 12 nach radial außen sich verjüngende Struktur aufweist.

Ein zwischen dem Verbindungsflanschbereich 22 bzw. der Anlagefläche 24 desselben und dem ersten axialen Ende 18 sich erstreckender, über die Anlagefläche 24 somit in Richtung der Anschlusselementenlängsachse A axial hervorstehender Abschnitt des Anschlusselementenkörpers 12 bildet einen hinsichtlich seiner Funktion nachfolgend erläuterten Zentrierabschnitt 28. Ein zwischen dem Verbindungsflanschbereich 22 bzw. dessen Verbindungsorgananlagefläche 26 und dem zweiten axialen Ende 20 sich erstreckender Abschnitt des Anschlusselementenkörpers 12 stellt einen Verbindungsabschnitt 30 bereit, mit welchem das Anschlusselement 10 an eine Komponente einer Abgasanlage angebunden werden kann.

In Fig. 2 ist deutlicher zu sehen, dass in einem Übergangsbereich 32 zwischen der zur Anschlusselementenlängsachse A im Wesentlichen orthogonal stehenden Anlagefläche 24 des Verbindungsflanschbereichs 22 und einer im Wesentlichen zylindrischen, beispielsweise mit kreisrundem Querschnittsprofil ausgebildeten Zentrier-Außenumfangsfläche 34 des Zentrierabschnitts 28 eine um die Anschlusselementenlängsachse A vorzugsweise vollständig umlaufende Einsenkung 36 ausgebildet ist. In dem in Fig. 2 dargestellten Ausgestaltungsbeispiel ist die Einsenkung 36 derart ausgebildet, dass deren Einsenkungsoberfläche 38 bezüglich der Anlagefläche 24 in Richtung vom ersten axialen Ende 18 des Anschlusselementenkörpers 12 zurückversetzt ist. Ferner ist die Einsenkung 36 derart ausgebildet, dass deren Einsenkungsoberfläche 38 vollständig radial außerhalb der Zentrier-Außenumfangsfläche 34 liegt bzw. mit ihrem radial inneren Endbereich an die Zentrier-Außenumfangsfläche 34 anschließt. Der Anschluss der Einsenkungsoberfläche 38 an die Zentrier-Außenumfangsfläche 34 oder/und an die Anlagefläche 24 ist vorzugsweise derart ausgebildet, dass ein zu einem Knick bzw. einer Kante führender Übergang vermieden ist.

Die Einsenkung 36 weist in ihrem wesentlichen Erstreckungsbereich zwischen der Anlagefläche 24 und der Zentrier-Außenumfangsfläche 34 einen im Wesentlichen konstanten Krümmungsradius R im Bereich von 1,1 mm bis 1,4 mm, vorzugsweise bei etwa 1,25 mm auf. Lediglich dort, wo die Einsenkungsoberfläche 38 an die Anlagefläche 24 bzw. die Zentrier-Außenumfangsfläche 34 anschließt, kann die Einsenkungsoberfläche 38 einen anderen bzw. sich ändernden Krümmungsradius aufweisen, um den vorangehend beschriebenen knickfreien bzw. kantenfreien Übergang zur Anlagefläche 24 bzw. zur Zentrier-Außenumfangsfläche 34 bereitstellen zu können.

Durch das Vorsehen der Einsenkung 36 im Übergangsbereich 32 zwischen der Anlagefläche 24 und der Zentrier-Außenumfangsfläche 34 des Zentrierabschnitts 28 wird ein scharfkantiger, im Wesentlichen rechtwinkliger Übergang vermieden. Dies bedeutet, dass im Betrieb auftretende mechanische und thermische Belastungen nicht zu Spannungsspitzen führen, da durch den gekrümmten Übergang zwischen der Anlagefläche 24 und der Zentrier-Außenumfangsfläche 34 eine gleichmäßigere Spannungs- bzw. Belastungsverteilung im Übergang vom Verbindungsflanschbereich 22 zum Zentrierabschnitt 28 erreicht wird. Somit kann das Auftreten von durch mechanische bzw. thermische Belastung ausgelösten Ermüdungsrissen in diesem Übergangsbereich 32 weitestgehend vermieden werden.

Die Fig. 2 zeigt das Anschlusselement 10 in einer prinzipartig dargestellten Abgasanlage 40. Der Verbindungsabschnitt 30 des Anschlusselementenkörpers 12 ist mit einer allgemein mit 42 bezeichneten Komponente einer Abgasanlage, beispielsweise einer Abgasbehandlungseinheit, verbunden. Hierzu kann der Verbindungsabschnitt 30 in einen rohrartigen Gehäuseabschnitt 44 eingesetzt und damit durch eine um die Anschlusselementenlängsachse A vorzugsweise vollständig umlaufende Schweißnaht 46 fest verbunden sein.

Die Fig. 2 zeigt das Anschlusselement 10 weiter in Verbindung mit einem Gegen-Anschlusselement 48, welches beispielsweise an einem stromabwärtigen Bereich eines Turboladers der Abgasanlage 40 vorgesehen sein kann. Das Gegen-Anschlusselement 48 weist einen Gegen-Verbindungsflanschbereich 50 auf, welcher eine Gegen-Anlagefläche 52 zur axialen Anlage der Anlagefläche 24 des Anschlusselements 10 aufweist. An seiner von der Gegen-Anlagefläche 52 abgewandten axialen Seite stellt der Gegen-Verbindungsflanschbereich 50 eine Gegen-Verbindungsorganabstützfläche 54 bereit, welche bezüglich der Gegen-Anlagefläche 52 angewinkelt ist, so dass auch der Gegen-Verbindungsflanschbereich 50 eine nach radial außen sich verjüngende Kontur aufweist. Durch ein den Verbindungsflanschbereich 22 und den Gegen-Verbindungsflanschbereich 50 von radial außen umgreifendes Verbindungsorgan 56, welches beispielsweise nach Art einer Rohrschelle oder dergleichen ausgebildet sein kann, werden das Anschlusselement 10 und das Gegen-Anschlusselement 48 in Richtung der Anschlusselementenlängsachse A gegeneinander gepresst, so dass die Anlagefläche 24 und die Gegen-Anlagefläche 52 fest und gasdicht gegeneinander gepresst sind. Erforderlichenfalls kann zwischen diesen ein ringartiges Dichtelement angeordnet sein. Bei einer alternativen Art zur Verbindung des Anschlusselements 10 mit dem Gegen-Anschlusselement 48 können in die Flanschbereiche 22, 50 eingreifende bzw. diese durchsetzende Schraubbolzen eingesetzt werden.

Das Gegen-Anlageelement 48 stellt eine Innenumfangsfläche 58 bereit, welche einen Abgasdurchlass 60 des Gegen-Anschlusselements 48 radial außen umgrenzt. Die Innenumfangsfläche 58 des Gegen-Anschlusselements 48 weist zumindest in demjenigen Längenbereich, in welchem das Anschlusselement 10 im Zusammenbauzustand mit seinem Zentrierabschnitt 28 in den Abgasdurchlass 60 des Gegen-Anschlusselements 48 eingreifend positioniert ist, eine an die Querschnittsgeometrie der Zentrier-Außenumfangsfläche 34 angepasste Querschnittsgeometrie auf. Beispielsweise kann die Innenumfangsfläche 58 zumindest in diesem Längenbereich eine im Wesentlichen zylindrische Struktur, beispielsweise mit kreisrundem Querschnitt, aufweisen.

Die Fig. 2 verdeutlicht, dass eine Innenabmessung, also beispielsweise der Innendurchmesser Dᵢ der Innenumfangsfläche 58 bzw. des Abgasdurchlasses 60 des Gegen-Anschlusselements 48 größer ist, als eine Außenabmessung, beispielsweise der Außendurchmesser D_{A}, des Anschlusselements 10 bzw. des Anschlusselementenkörpers 12 im Bereich der Zentrier-Außenumfangsfläche 34, so dass bei exakt radial zueinander ausgerichtetem Anschlusselement 10 und Gegen-Anschlusselement 48 ein spaltartiger Zwischenraum 62 mit einer Abmessung d gebildet ist, welche der Hälfte der Differenz zwischen der Innenabmessung bzw. dem Innendurchmesser Dᵢ und der Außenabmessung bzw. dem Außendurchmesser D_{A} entspricht. Diese Differenz kann im Bereich von 0,1 mm bis 0,5 mm liegen. Somit ist sichergestellt, dass trotz einer ausreichend präzise wirkenden Zentrierfunktion des Zentrierabschnitts 28 auch bei starker Erwärmung des Gegen-Anschlusselements 48 sowie des Anschlusselements 10 ein zu einer zu starken Pressung zwischen dem Zentrierabschnitt 28 und dem Gegen-Anschlusselement 48 führender Anlagekontakt vermieden wird, wodurch insbesondere auch ein Beitrag zur Entlastung des Übergangsbereichs 32 zwischen der Anlagefläche 24 und der Zentrier-Außenumfangsfläche 34 geleistet wird.

Einen weiteren Beitrag zur Entlastung in diesem Bereich leistet eine vergleichsweise kurze Ausgestaltung des Zentrierabschnitts 28, also des axial zwischen der Anlagefläche 24 und dem ersten axialen Ende 18 sich erstreckenden Teils des Anschlusselementenkörpers 12. Eine Länge L des Zentrierabschnitts 28 liegt vorzugswiese im Bereich von 3 mm bis 6 mm, am meisten bevorzugt bei etwa 3,5 mm. Eine derartige Dimensionierung des Zentrierabschnitts 28 gewährleistet einerseits eine ausreichend zuverlässige Zentrierfunktion durch diesen beim Zusammenfügen des Anschlusselements 10 mit dem Gegen-Anschlusselement 48, reduziert jedoch die über den Zentrierabschnitt 28 in das Anschlusselement 10 eingeleiteten Kräfte wesentlich.

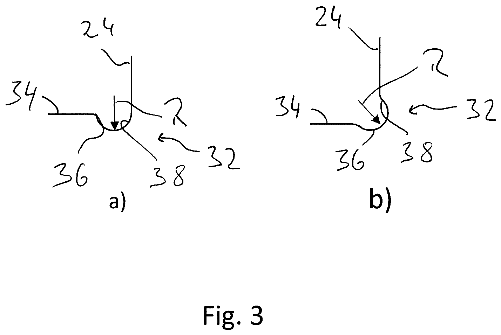

In Fig. 3 sind prinzipartig Variationen hinsichtlich der Ausgestaltung bzw. der Positionierung der im Übergangsbereich 32 zwischen der Anlagefläche 24 und der Zentrier-Außenumfangsfläche 34 vorgesehenen Einsenkung 36 dargestellt. Bei der in Fig. 3a) dargestellten Ausgestaltungsvariante ist die Einsenkung 36 derart positioniert, dass diese mit ihrer Einsenkungsoberfläche 38 nach radial innen bezüglich der Zentrier-Außenumfangsfläche 34 zurückversetzt ist, axial jedoch vollständig im Bereich des Zentrierabschnitts 28 liegt und daher die Anlagefläche 24 axial nicht übergreift. Bei der in Fig. 3b) dargestellten Positionierung der Einsenkung 36 ist deren Einsenkungsoberfläche 38 mit dem an die Zentrier-Außenumfangsfläche 34 anschließenden Bereich derselben nach radial innen zurückversetzt, und ist mit dem an die Anlagefläche 24 anschließenden Bereich derselben axial in Richtung vom ersten Ende 18 des Anschlusselementenkörpers 12 weg versetzt.

Auch bei den in den Fig. 3a) und 3b) dargestellten Ausgestaltungsvarianten schließt die Einsenkungsoberfläche 38 an die Anlagefläche 24 bzw. die Zentrier-Außenumfangsfläche 34 vorzugsweise derart an, dass ein knickartiger bzw. kantenartiger Übergang vermieden ist. Durch das Positionieren der Einsenkung 36 in der in Fig. 3 dargestellten Art und Weise wird gleichermaßen das Auftreten von Spannungsspitzen im Übergangsbereich 32 vermieden, wenn im Betrieb einer Abgasanlage das Anschlusselement 10 einer vergleichsweise starken thermischen und mechanischen Belastung unterliegt.

Obgleich das vorangehend beschriebene und in den Figuren dargestellte Anschlusselement in besonders vorteilhafter Weise eingesetzt werden kann, wenn dieses dazu genutzt wird, einen auf einen Turbolader folgenden Systembereich einer Abgasanlage an ein an dem Turbolader vorgesehenes Gegen-Anschlusselement anzuschließen, ist darauf hinzuweisen, dass selbstverständlich ein derartiges Anschlusselement auch in anderen Bereichen einer Abgasanlage genutzt werden kann, um zwei Komponenten einer Abgasanlage miteinander zu verbinden, wobei an einer dieser Komponenten dann das Anschlusselement und an der anderen dieser Komponenten das Gegen-Anschlusselement bzw. eine einen derartigen Gegen-Anschlusselement 48 entsprechende Formation vorgesehen ist.

## Patentansprüche

1. Anschlusselement für eine Abgasanlage einer Brennkraftmaschine, umfassend:
- einen in Richtung einer Anschlusselementenlängsachse (A) sich erstreckenden Anschlusselementenkörper (12), wobei eine Innenumfangsfläche (14) des Anschlusselementenkörpers (12) einen Abgasdurchlass (16) des Anschlusselements (10) umgrenzt,
- einen von dem Anschlusselementenkörper (12) nach radial außen sich erstreckenden, die Anschlusselementenlängsachse (A) umgebenden Verbindungsflanschbereich (22), wobei der Verbindungsflanschbereich (22) eine in Richtung zu einem ersten axialen Ende (18) des Anschlusselementenkörpers (12) orientierte Anlagefläche (24) aufweist,
wobei ein über die Anlagefläche (24) axial hervorstehender und das erste axiale Ende (18) des Anschlusselementenkörpers (12) bereitstellender Abschnitt des Anschlusselementenkörpers (12) einen Zentrierabschnitt (28) mit einer Zentrier-Außenumfangsfläche (34) bereitstellt, wobei in einem Übergangsbereich (32) zwischen der Anlagefläche (24) und der Zentrier-Außenumfangsfläche (34) eine die Anschlusselementenlängsachse (A) umgebende Einsenkung (36) mit einer bezüglich der Anlagefläche (24) axial in Richtung vom ersten axialen Ende (16) weg versetzten oder/und bezüglich der Zentrier-Außenumfangsfläche (34) nach radial innen versetzten Einsenkungsoberfläche (38) vorgesehen ist,
**dadurch gekennzeichnet, dass** ein Krümmungsradius (R) der Einsenkung (36) im Übergang von der Anlagefläche (24) zur Zentrier-Außenumfangsfläche (34) im Bereich von 1,1 mm bis 1,4 mm liegt.

2. Anschlusselement nach Anspruch 1, **dadurch gekennzeichnet, dass** die Anlagefläche (24) zur Anschlusselementenlängsachse (A) im Wesentlichen orthogonal orientiert ist oder/und die Anschlusselementenlängsachse (A) vollständig umgibt.

3. Anschlusselement nach Anspruch 1 oder 2, **dadurch gekennzeichnet, dass** die Zentrier-Außenumfangsfläche (34) bezüglich der Anschlusselementenlängsachse (A) im Wesentlichen zylindrisch ausgebildet ist oder/und die Anschlusselementenlängsachse (A) vollständig umgibt.

4. Anschlusselement nach einem der Ansprüche 1-3, **dadurch gekennzeichnet, dass** die Einsenkung (36) die Anschlusselementenlängsachse (A) vollständig umgibt.

5. Anschlusselement nach einem der Ansprüche 1-4, **dadurch gekennzeichnet, dass** die Einsenkung (36) im Übergang von der Anlagefläche (24) zur Zentrier-Außenumfangsfläche (34) einen im Wesentlichen konstanten Krümmungsradius (R) aufweist.

6. Anschlusselement nach einem der Ansprüche 1-5, **dadurch gekennzeichnet, dass** ein Krümmungsradius (R) der Einsenkung (36) im Übergang von der Anlagefläche (24) zur Zentrier-Außenumfangsfläche (34) bei etwa 1,25 mm liegt.

7. Anschlusselement nach einem der Ansprüche 1-6, **dadurch gekennzeichnet, dass** eine axiale Länge des Zentrierabschnitts (28) im Bereich von 3 mm bis 6 mm, vorzugsweise bei etwa 3,5 mm, liegt.

8. Anschlusselement nach einen der Ansprüche 1-7, **dadurch gekennzeichnet, dass** der Anschlusselementenkörper (12) an einer bezüglich des Zentrierabschnitts (28) axial entgegengesetzten Seite des Verbindungsflanschbereichs (22) einen ein zweites axiales Ende (20) des Anschlusselementenkörpers (12) bereitstellenden Verbindungsabschnitt (30) zur Anbindung an eine Abgasführungskomponente einer Abgasanlage (40) bereitstellt.

9. Abgasanlage für eine Brennkraftmaschine, umfassend ein Anschlusselement (10) nach einem der vorangehenden Ansprüche sowie ein Gegen-Anschlusselement (48) mit einem eine Gegen-Anlagefläche (52) bereitstellenden Gegen-Verbindungsflanschbereich (50) und einem von einer Innenumfangsfläche (58) des Gegen-Anschlusselements (48) umgrenzten Abgasdurchlass (60) des Gegen-Anschlusselements (48), wobei bei bezüglich der Gegen-Anlagefläche (52) abgestützter Anlagefläche (24) der Zentrierabschnitt (28) in den Abgasdurchlass (60) des Gegen-Anschlusselements (48) eingreifend positioniert ist.

10. Abgasanlage nach Anspruch 9, **dadurch gekennzeichnet, dass** die Innenumfangsfläche (58) des Gegen-Anschlusselements (48) wenigstens in dem den Zentrierabschnitt (28) aufnehmenden Längenbereich im Wesentlichen zylindrisch ausgebildet ist.

11. Abgasanlage nach Anspruch 9 oder 10, **dadurch gekennzeichnet, dass** eine Differenz (2d) zwischen einer Innenabmessung, vorzugsweise Innendurchmesser (Dᵢ), der Innenumfangsfläche (58) des Gegen-Anschlusselements (48) und einer Außenabmessung, vorzugsweise Außendurchmesser (Dₐ), der Zentrier-Außenumfangsfläche (34) im Bereich von 0,1 mm bis 0,5 mm liegt.

## Claims

1. A connection element for an exhaust system of an internal combustion engine, comprising:
- a connection element body (12) extending in the direction of a connection element longitudinal axis (A), wherein an inner circumferential surface (14) of the connection element body (12) delimits an exhaust gas passage (16) of the connection element (10),
- a connecting flange region (22) extending radially outward from the connection element body (12) and surrounding the connection element longitudinal axis (A), wherein the connecting flange region (22) has an abutment surface (24) oriented in the direction of a first axial end (18) of the connection element body (12),
wherein a section of the connection element body (12) which projects axially beyond the abutment surface (24) and provides the first axial end (18) of the connection element body (12) provides a centering section (28) having a centering outer circumferential surface (34), wherein a depression (36) surrounding the connection element longitudinal axis (A) and having a depression surface (38) which is offset axially in the direction away from the first axial end (16) with respect to the abutment surface (24) or/and is offset radially inward with respect to the centering outer circumferential surface (34) is provided in a transitional region (32) between the abutment surface (24) and the centering outer circumferential surface (34), **characterized in that** a radius of curvature (R) of the depression (36) in the transition from the abutment surface (24) to the centering outer circumferential surface (34) is in the range of from 1.1 mm to 1.4 mm.

2. The connection element as claimed in claim 1, **characterized in that** the abutment surface (24) is oriented substantially orthogonally with respect to the connection element longitudinal axis (A) and/or completely surrounds the connection element longitudinal axis (A).

3. The connection element as claimed in claim 1 or 2, **characterized in that** the centering outer circumferential surface (34) is of substantially cylindrical design with respect to the connection element longitudinal axis (A) or/and completely surrounds the connection element longitudinal axis (A).

4. The connection element as claimed in any of claims 1-3, **characterized in that** the depression (36) completely surrounds the connection element longitudinal axis (A).

5. The connection element as claimed in any of claims 1-4, **characterized in that** the depression (36) has a substantially constant radius of curvature (R) in the transition from the abutment surface (24) to the centering outer circumferential surface (34).

6. The connection element as claimed in any of claims 1-5, **characterized in that** a radius of curvature (R) of the depression (36) in the transition from the abutment surface (24) to the centering outer circumferential surface (34) is in the range of about 1.25 mm.

7. The connection element as claimed in any of claims 1-6, **characterized in that** an axial length of the centering section (28) is in the range of from 3 mm to 6 mm, preferably about 3.5 mm.

8. The connection element as claimed in any of claims 1-7, **characterized in that,** on an axially opposite side of the connecting flange region (22) from the centering section (28), the connection element body (12) provides a connecting section (30), which provides a second axial end (20) of the connection element body (12), for attachment to an exhaust gas carrying component of an exhaust system (40).

9. An exhaust system for an internal combustion engine, comprising a connection element (10) as claimed in any of the preceding claims and a mating connection element (48) having a mating connecting flange region (50), which provides a mating abutment surface (52), and having an exhaust gas passage (60) of the mating connection element (48), which passage is delimited by an inner circumferential surface (58) of the mating connection element (48), wherein the centering section (28) is positioned so as to engage in the exhaust gas passage (60) of the mating connection element (48) when the abutment surface (24) is supported with respect to the mating abutment surface (52).

10. The exhaust system as claimed in claim 9, **characterized in that** the inner circumferential surface (58) of the mating connection element (48) is of substantially cylindrical design, at least in the longitudinal region which receives the centering section (28).

11. The exhaust system as claimed in claim 9 or 10, **characterized in that** a difference (2d) between an inner dimension, preferably inner diameter (Dᵢ), of the inner circumferential surface (58) of the mating connection element (48) and an outer dimension, preferably outer diameter (Dₐ), of the centering outer circumferential surface (34) is in the range of from 0.1 mm to 0.5 mm.

## Revendications

1. Un élément de connexion pour un système d'échappement d'un moteur à combustion interne, comprenant :
- un corps d'élément de connexion (12) s'étendant dans la direction d'un axe longitudinal d'élément de connexion (A), dans lequel une surface circonférentielle intérieure (14) du corps d'élément de connexion (12) délimite un passage de gaz d'échappement (16) de l'élément de connexion (10),
- une zone de bride de connexion (22) s'étendant radialement vers l'extérieur du corps d'élément de connexion (12) et entourant l'axe longitudinal d'élément de connexion (A), dans laquelle la zone de bride de connexion (22) présente une surface de butée (24) orientée en direction d'une première extrémité axiale (18) du corps d'élément de connexion (12),
dans laquelle une section du corps d'élément de connexion (12) qui dépasse axialement la surface de butée (24) et fournit la première extrémité axiale (18) du corps d'élément de connexion (12) fournit une section de centrage (28) ayant une surface circonférentielle extérieure de centrage (34), dans lequel une dépression (36) entourant l'axe longitudinal d'élément de connexion (A) et présentant une surface de dépression (38) décalée axialement dans la direction opposée à la première extrémité axiale (16) par rapport à la surface de butée (24) ou/et décalée radialement vers l'intérieur par rapport à la surface circonférentielle extérieure de centrage (34) est prévue dans une région de transition (32) entre la surface de butée (24) et la surface circonférentielle extérieure de centrage (34),
**caractérisé en ce que** un rayon de courbure (R) de la dépression (36) dans la transition entre la surface de butée (24) et la surface circonférentielle extérieure de centrage (34) est compris entre 1,1 mm et 1,4 mm.

2. L'élément de connexion selon la revendication 1, **caractérisé en ce que** la surface de butée (24) est orientée de manière sensiblement orthogonale par rapport à l'axe longitudinal d'élément de connexion (A) et/ou entoure complètement l'axe longitudinal d'élément de connexion (A).

3. L'élément de connexion selon la revendication 1 ou 2, **caractérisé en ce que** la surface circonférentielle extérieure de centrage (34) est de conception sensiblement cylindrique par rapport à l'axe longitudinal d'élément de connexion (A) ou/et entoure complètement l'axe longitudinal d'élément de connexion (A).

4. L'élément de connexion selon l'une des revendications 1 à 3, **caractérisé en ce que** la dépression (36) entoure complètement l'axe longitudinal d'élément de connexion (A).

5. L'élément de connexion selon l'une des revendications 1 à 4, **caractérisé en ce que** la dépression (36) a un rayon de courbure (R) sensiblement constant dans la transition entre la surface de butée (24) et la surface circonférentielle extérieure de centrage (34).

6. L'élément de connexion selon l'une des revendications 1 à 5, **caractérisé en ce que** le rayon de courbure (R) de la dépression (36) dans la transition entre la surface de butée (24) et la surface circonférentielle extérieure de centrage (34) est de l'ordre d'environ 1,25 mm.

7. L'élément de connexion selon l'une des revendications 1 à 6, **caractérisé en ce que** la longueur axiale de la section de centrage (28) est comprise entre 3 mm et 6 mm, de préférence environ 3,5 mm.

8. L'élément de connexion selon l'une des revendications 1 à 7, **caractérisé en ce que,** sur un côté axialement opposé de la zone de la bride de connexion (22) par rapport à la section de centrage (28), le corps d'élément de connexion (12) fournit une section de connexion (30), qui fournit une deuxième extrémité axiale (20) du corps d'élément de connexion (12), pour la fixation à un élément de transport des gaz d'échappement d'un système d'échappement (40).

9. Un système d'échappement pour un moteur à combustion interne, comprenant un élément de connexion (10) selon l'une des revendications précédentes et un contre-élément de connexion (48) ayant une contre-zone de bride de connexion (50), qui fournit une contre-surface de butée (52), et ayant un passage de gaz d'échappement (60) du contre-élément de connexion (48), lequel passage est délimité par une surface circonférentielle intérieure (58) du contre-élément de connexion (48), dans lequel la section de centrage (28) est positionnée de manière à s'engager dans le passage des gaz d'échappement (60) du contre-élément de connexion (48) lorsque la surface de butée (24) est supportée par rapport à la contre-surface de butée (52).

10. Le système d'échappement selon la revendication 9, **caractérisé en ce que** la surface circonférentielle intérieure (58) du contre-élément de connexion (48) est de conception sensiblement cylindrique, au moins dans la région longitudinale qui reçoit la section de centrage (28).

11. Le système d'échappement selon la revendication 9 ou 10, **caractérisé en ce qu'**une différence (2d) entre une dimension intérieure, de préférence le diamètre intérieur (Di), de la surface circonférentielle intérieure (58) du contre-élément de connexion (48) et une dimension extérieure, de préférence le diamètre extérieur (Dₐ), de la surface circonférentielle extérieure de centrage (34) est comprise entre 0,1 mm et 0,5 mm.
